# EUROPÄISCHE PATENTSCHRIFT

(11) **EP 1 285 798 B1**
(45) Veröffentlichungstag und Bekanntmachung des Hinweises auf die Patenterteilung: **24.05.2006**
(21) Anmeldenummer: 02018463.6
(22) Anmeldetag: 16.08.2002
(51) Int. Cl.: B60J 7/043

(54) **Spoiler-Fahrzeugdach**
Spoiler vehicle roof
Toit de véhicule à déflecteur

(30) Priorität: 23.08.2001 DE 10140389
(43) Veröffentlichungstag der Anmeldung: 26.02.2003
(73) Patentinhaber: Webasto Vehicle Systems International GmbH, 82131 Stockdorf (DE)
(72) Erfinder: Radmanic, Stjepan, 82291 Mammendorf (DE)
(74) Vertreter: Konnerth, Dieter Hans

(56) Entgegenhaltungen:
- EP-A- 0 638 452
- DE-C- 10 023 314
- US-B1- 6 199 944

## Beschreibung

Die Erfindung betrifft ein Fahrzeugdach mit wenigstens einem an seiner Hinterkante ausstellbaren und verschiebbaren Deckel und mit einer Steuermechanik für den Deckel, die einen nahe der Hinterkante des Deckels an diesem angelenkten hinteren Hub- und Verschiebemechanismus aufweist, der wenigstens einen mit dem Deckel verbundenen Steuerschlitten umfasst, der in seitlichen Führungsschienen verschiebbar geführt und antreibbar ist.

Aus der DE 42 38 945 A1 ist ein Fahrzeugdach mit wenigstens einem Deckel bekannt, der zum Öffnen mittels eines Ausstellhebels an seiner Hinterkante anhebbar und anschließend oberhalb des festen Fahrzeugdaches verschiebbar ist. Die Verschiebebewegung erfolgt mittels eines ersten Antriebskabels und die Ausstellbewegung erfolgt mittels eines gegenläufig zu diesem bewegbaren zweiten Antriebskabels. Ein die Ausstellbewegung steuernder Ausstellhebel steht über einen hinteren Schlitten in ständigem Eingriff mit dem einen Antriebskabel, während ein nahe der Vorderkante angeordneter Schlitten, der für die Verschiebebewegung des Deckels zuständig ist, in ständigem Eingriff mit dem gegenläufig hierzu bewegbaren anderen Antriebskabel steht. Durch diese ständige Kopplung ist eine vollständige Trennung der Ausstellbewegung von der Verschiebebewegung nur bedingt möglich und für die Ausstellbewegung steht nur ein relativ kurzer Verfahrweg des Antriebskabels zur Verfügung.

Die Nachteile des vorstehend erläuterten bekannten Fahrzeugdaches werden durch ein Fahrzeugdach der eingangs genannten Art überwunden, das in der DE 197 13 348 C1 offenbart ist. Insbesondere gewährleistet dieses Fahrzeugdach eine klar definierte Position des Deckels während der Ausstellbewegung durch Verriegelung eines die Verstellbewegung des Deckels bewegenden Steuerschlittens während der Ausstellbewegung über einen Riegelstein mit einer dachfesten Führungsschiene. Durch die Entkopplung von der Führungsschiene und gleichzeitige Kopplung mit einem Steuerschlitten wird ein eindeutiger Beginn der Verschiebebewegung definiert, da das erste Antriebskabel nach Beendigung eines Leerweges bei vollendeter Ausstellbewegung den Riegelstein aus seiner Verriegelungsposition mit der Führungsschiene in eine Kopplungsposition des Antriebskabels mit dem Steuerschlitten bewegt.

Nachteilig bei den bekannten Dächern ist, dass der Deckel in seiner Schließposition nur über den Ausstellhebel und einen in der Führungsschiene verschiebbaren Schlitten gehalten wird. Wird das mit einem solchen Dach ausgestattete Fahrzeug bei hoher Geschwindigkeit betrieben, so wird der verschiebbare Deckel an seiner Hinterkante aufgrund des durch den über das Fahrzeug hinweg strömenden Luftstrom hervorgerufenen Unterdrucks nach oben gezogen, was schließlich dazu führen kann, dass der Deckel von der am Dachrahmen vorgesehenen Dichtung abgehoben wird. Durch den hierbei entstehenden Spalt werden Geräusche verursacht, die von den Fahrzeuginsassen als störend empfunden werden.

Der Erfindung liegt die Aufgabe zugrunde, ein Fahrzeugdach der eingangs genannten Art zu schaffen, dessen hintere Verstell- und Hubmechanik eine erhöhte Stabilität in der Deckelschließposition aufweist.

Diese Aufgabe wird bei dem eingangs genannten Fahrzeugdach dadurch gelöst, dass ein bewegbares Teil des Hub- und Verschiebemechanismus und ein dachfestes Teil Eingriffselemente aufweisen, die in der Schließposition des Deckels wirksam sind und einem Ausdrücken des Deckels nach oben entgegenwirken.

Durch die an dem bewegbaren Teil des Hub- und Verschiebemechanismus vorgesehenen Eingriffselemente wird gewährleistet, dass in der Schließposition des Deckels der Deckel und insbesondere dessen Hinterkante sicher mit den dachfesten Eingriffselementen verriegelt ist und auch bei starken auf den hinteren Dekkelbereich einwirkenden Kräften nicht nach oben gezogen wird. Auf diese Weise werden ein Anheben des Deckels von der am Dachrahmen vorgesehenen Dichtung und damit das Entstehen störender Windgeräusche ausgeschlossen.

Vorteilhafte Weiterbildungen der Erfindung ergeben sich aus den Unteransprüchen.

Während das bewegbare Teil des Hub- und Verschiebemechanismus vorzugsweise von einem Ausstellhebel gebildet wird, kann das dachfeste Teil eine Verriegelungskulisse umfassen, in die das an dem bewegbaren Teil des Hub- und Verschiebemechanismus vorgesehene Eingriffselement beim Schließen des Deckels einfährt.

Des weiteren kann das Eingriffselement an dem bewegbaren Teil des Hub- und Verschiebemechanismus als ein seitlich vorstehender Sperrwinkel ausgebildet sein, wobei mindestens der seitlich vorstehende Teil des Sperrwinkels vorzugsweise mit einen Gleitelement versehen ist.

Obschon in der Schließposition des Deckels eine Bewegung des Deckels nach unten grundsätzlich durch die dachfesten Anlageflächen, wie z.B. eine dachfeste Dichtung, ausgeschlossen wird, können, um einer übermäßigen Bewegung des Deckels gegen die dachfeste Dichtung entgegenzuwirken, die Eingriffselemente ferner so gestaltet sein, dass sie in der Schließposition des Deckels einem Ausdrücken des Deckels auch nach unten entgegenwirken

Die Stabilität des geschlossenen Fahrzeugdaches lässt sich noch weiter erhöhen, wenn ein bewegbares Teil des Hub- und Verschiebemechanismus und ein mit dem Deckel verbundenes Teil jeweils in der Schließposition des Deckels wirksame Verriegelungselemente aufweisen, die einem Ausdrücken des Deckels nach oben entgegenwirken. Durch die doppelte Verriegelung des Deckels, einerseits mittels der Eingriffselemente und andererseits mittels der Verriegelungselemente, wird gewährleistet, dass der Deckel auch bei einem hohen gegen die Innenseite des Deckels gerichteten Druck, wie er im Crashfall durch den Aufprall eines Fahrzeuginsassen gegen die Deckelunterseite hervorgerufen werden könnte, nicht nach oben aus der Dachöffnung gedrückt werden kann.

Bei dem bewegbaren Teil des Hub- und Verschiebemechanismus kann es sich hierbei wiederum um einen Ausstellhebel handeln, vorzugsweise um den selben Ausstellhebel, an welchem das dem bewegbaren Teil des Hub- und Verschiebe-mechanismus zugeordnete Eingriffselement vorgesehen ist.

Das mit dem Deckel verbundene Teil kann hierbei von einer Deckelführung gebildet werden, die mit einem Teil des Hub- und Verschiebemechanismus in Eingriff steht und die eine Relativbewegung desselben gegenüber dem Deckel beim Ausstellen ermöglicht.

Die Verriegelungselemente können beispielsweise als nach unten abgebogene bzw. als seitlich und nach oben vorstehende Verriegelungslaschen ausgebildet sein.

Das vorliegend erläuterte Fahrzeugdach ist bevorzugt bei einem solchen Fahrzeug einsetzbar, bei welchem der Deckel oberhalb des festen Fahrzeugdaches nach hinten verschiebbar ist.

Nachfolgend wird die Erfindung anhand der Zeichnungen beispielhaft näher erdautert. Es zeigen:
- FIG. 1: eine schematische perspektivische Ansicht eines Fahrzeugdaches mit geschlossenem Deckel,
- FIG. 2: eine Darstellung gemäß FIG. 1 bei vollständig geöffnetem Deckel,
- FIG. 3: einen Längsschnitt durch einen Seitenrand des Fahrzeugdaches im Bereich der Ausstellmechanik bei geschlossenem Deckel,
- FIG. 4: einen Längsschnitt gemäß FIG. 3 durch eine vordere Ausstellmechanik in vergrößerter Darstellung,
- FIG. 5: einen Längsschnitt gemäß FIG. 3 durch eine hintere Ausstellmechanik in vergrößerter Darstellung,
- FIG. 6: einen Längsschnitt durch einen Seitenrand des Fahrzeugdaches im Bereich der Ausstellmechanik bei ausgestelltem Deckel,
- FIG. 7: einen Längsschnitt durch einen Seitenrand des Fahrzeugdaches im Bereich der Ausstellmechanik am Ende einer Übergangsbewegung,
- FIG. 8: einen Längsschnitt durch einen Seitenrand des Fahrzeugdaches im Bereich der Ausstellmechanik in einer Zwischenstellung,
- FIG. 9: einen Längsschnitt durch einen Seitenrand des Fahrzeugdaches im Bereich der Ausstellmechanik bei geöffnetem Deckel,
- FIG. 10: einen Längsschnitt gemäß FIG. 3 durch eine hintere Ausstellmechanik in geschlossener Position des Deckels mit der in Eingriff befindlichen Verriegelung,
- FIG. 11: einen Querschnitt gemäß der Linie B-B in FIG. 10;
- FIG. 12: einen Querschnitt gemäß der Linie A-A in FIG. 10;
- FIG. 13: einen Querschnitt gemäß der Linie C-C in FIG. 10; und
- FIG. 14: eine Ansicht ähnlich FIG. 10, welche die hintere Ausstellmechanik des Deckels in einer ausgestellten Zwischenposition zeigt, wenn die Eingriffselemente und die Verriegelungselemente gerade entriegeln.

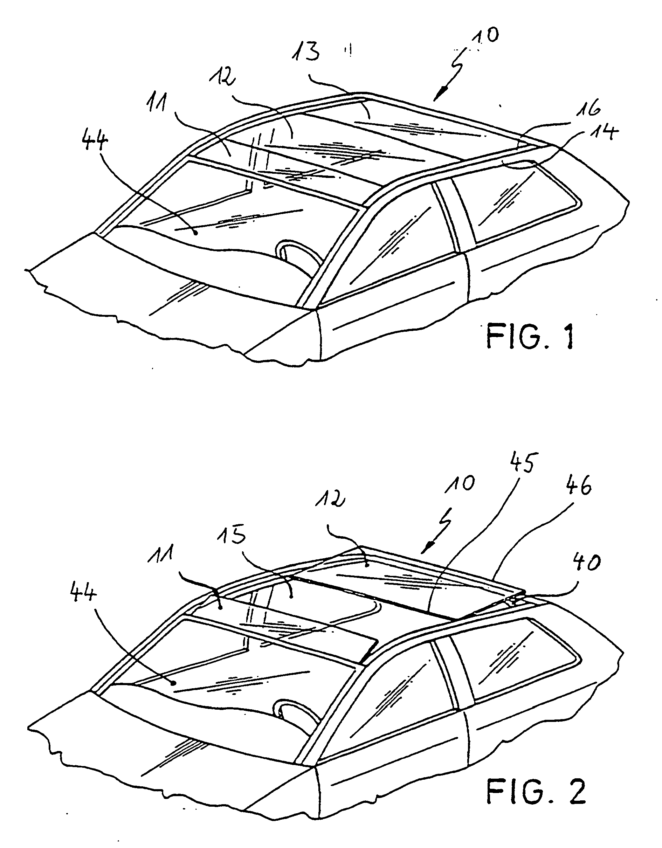

Ein Fahrzeugdach 10 (siehe FIG. 1) umfasst eine oberhalb einer Windschutzscheibe 44 schwenkbar angeordnete Windabweiserlamelle 11, einen hinter dieser Windabweiserlamelle 11 liegenden verschiebbaren Deckel 12 und eine sich an den geschlossenen Deckel 12 anschließende feste Dachscheibe 13. Seitlich werden die Windabweiserlamelle 11, der Deckel 12 und die Dachscheibe 13 jeweils von einem Seitenholm 14 begrenzt.

Im geschlossenen Zustand gemäß FIG. 1 bietet das Fahrzeugdach 10 ein vollkommen glattflächiges Erscheinungsbild. Obwohl der Deckel 12 zur Freigabe einer Dachöffnung 15 nach hinten über das feste Fahrzeugdach 10 verschiebbar ist (siehe FIG. 2), sind hierzu keinerlei oberhalb des festen Fahrzeugdaches 10 angeordnete Führungen erforderlich. Im ausgestellten und nach hinten verfahrenen Zustand wird der Deckel 12 vielmehr mittels seitlich im Bereich der Hinterkante 46 des Deckels 12 angelenkter Stützhebel 40 abgestützt, welche in unterhalb des Niveaus der festen Dachhaut angeordneten Führungen verfahrbar sind und welche beim Austreten nach oben ein flexibles Dichtelement 16 teilweise verdrängen, welches zwischen den Seitenholmen 14 und den Bauteilen 11, 12 und 13 angeordnet ist.

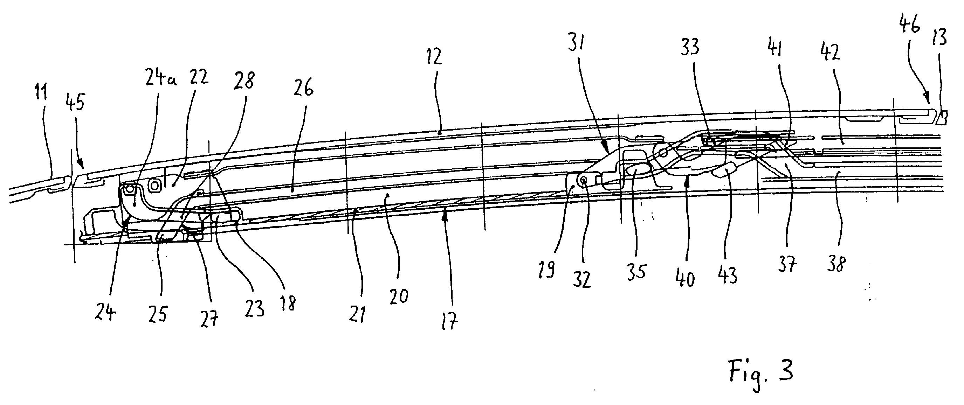

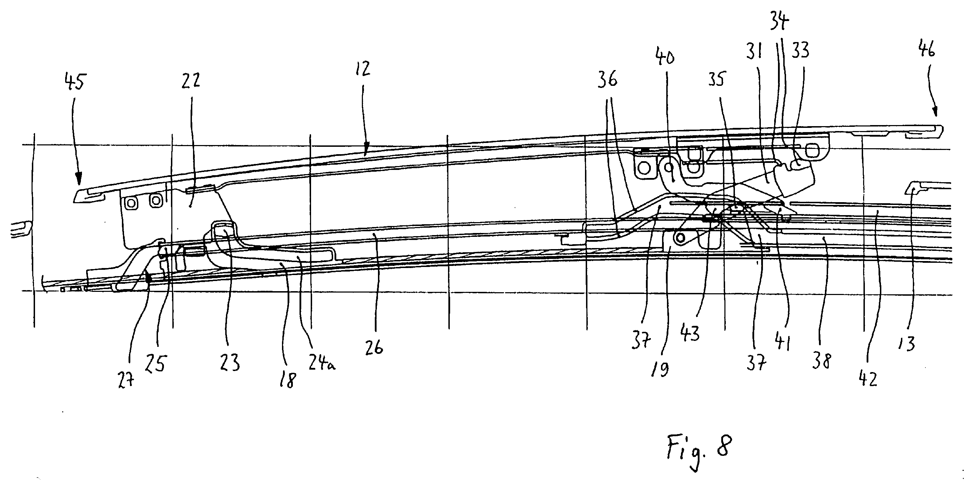

Die für das Ausstellen und Verschieben des Deckels 12 erforderliche Mechanik ist an der linken und rechten Seite des Deckels 12 gleichartig aufgebaut, so dass lediglich die Mechanik der einen Seite beschrieben und nachfolgend anhand der FIG. 3 bis 14 erläutert wird.

Die Ausstell- und Verschiebemechanik für den Deckel 12 umfasst eine Führungsschiene 17, die als Profilteil mit in Längsrichtung verlaufenden Führungsbahnen gebildet ist. In einer unteren Führungsbahn 20 sind ein vorderer Steuerschlitten 18 und ein hinterer Steuerschlitten 19 längsverschiebbar geführt. Die beiden Steuerschlitten 18 und 19 sind unter gegenseitigem Abstand mit einem Antriebskabel 21 fest verbunden. Die Steuerschlitten 18 und 19 sind außerdem mit der Vorderkante 45 bzw. der Hinterkante 46 des Deckels 12 verbunden, und zwar jeweils über eine Kulissenführung bzw. Stützhebel zum Anheben und Tragen der Vorderkante 45 bzw. der Hinterkante 46 des Deckels 12 bei dessen Verstellung zwischen seiner Schließ- und seiner Öffnungsposition, wie im folgenden zunächst für die Vorderkante 45 und dann für die Hinterkante 46 des Deckels 12 im einzelnen erläutert wird.

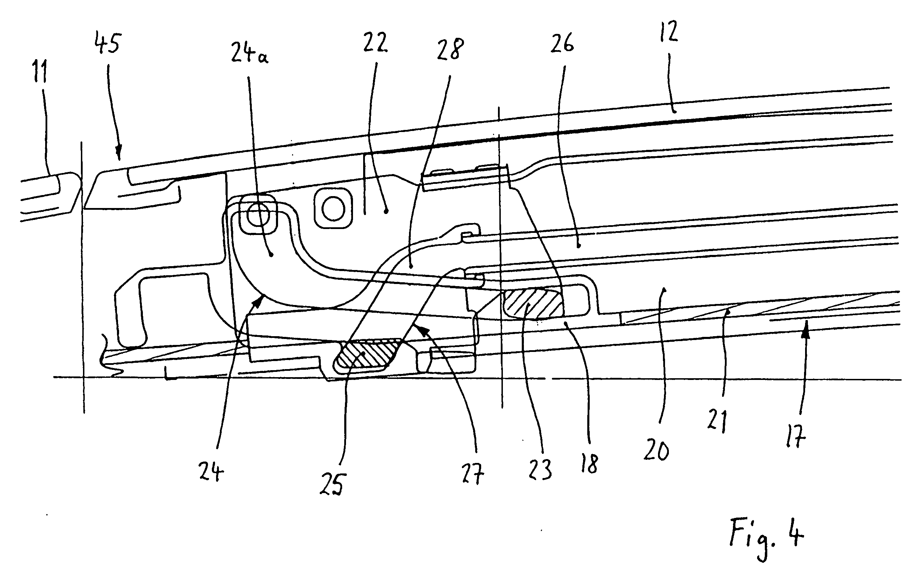

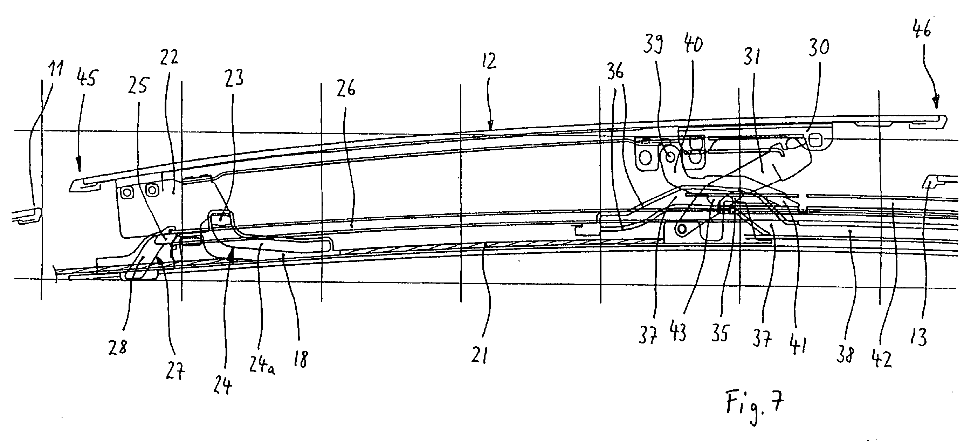

Wie insbesondere in FIG. 4 dargestellt ist, ist an der Unterseite des Deckels 12 im Bereich von dessen Vorderkante 45 ein seitlicher vertikaler Deckelträger 22 angeordnet. Am unteren Rand des Deckelträgers 22 ist ein seitlich hervorstehender Gleitzapfen 23 mit Abstand von der Vorderkante 45 des Deckels 12 fest angebracht. Der Gleitzapfen 23 greift in eine Kulissenbahn 24a einer Hubkulisse 24 ein, die am vorderen Steuerschlitten 18 fest angebracht bzw. einstückig mit diesem gebildet ist. Die Kulissenbahn 24a der Hubkulisse 24 weist einen von ihrem hinteren Ende zu ihrem vorderen Ende im Bereich der Vorderkante 45 des Dekkels 12 ansteigenden Verlauf auf. Insbesondere ist die Kulissenbahn 24a in etwa L-förmig mit einem vorderen kurzen gebogenen Schenkelabschnitt und einem hinteren langen gebogenen Schenkelabschnitt gebildet. Der Gleitzapfen 23 befindet sich bei geschlossenem Deckel 12 im Bereich des hinteren Endes der Kulissenbahn 24a (FIG. 4) und bei vorne angehobenem Deckel 12 sowie während der Verschiebung des Deckels 12 am vorderen erhöhten Ende der Kulissenbahn 24a (siehe z.B. FIG. 7). Der Gleitzapfen 23 bewegt sich in der Kulissenbahn 24a aufgrund einer durch das Antriebskabel 21 bewirkten Längsverschiebung des Steuerschlittens 18, wobei der Gleitzapfen 23 aus seiner in FIG. 3 gezeigten unteren Position bei geschlossenem Deckel 12 durch eine rückwärts gerichtete Verschiebung des vorderen Steuerschlittens 18 in seine obere Position gelangt, in welcher die Vorderkante 45 des Deckels 12 angehoben ist (siehe FIG. 7).

Von dem Deckelträger 22 steht seitlich ein Schiebezapfen 25 hervor, der ebenfalls am unteren Rand des Deckelträgers 22 angebracht ist und bei der dargestellten Ausführungsform in Fahrzeuglängsrichtung vor dem Gleitzapfen 23 liegt. Die Führungsschiene 17 umfasst des weiteren eine Führungsbahn 26 für den Schiebezapfen 25, die parallel zur Schlittenführungsbahn 20 in Längsrichtung der Führungsschiene 17 verläuft. An das Vorderende der Schiebezapfen-Führungsbahn 26 schließt sich eine Kulisse 27 zur Führung der Vorderkante 45 des Dekkels 12 bei dessen Ausstell- und Absenkbewegung an. Diese Kulisse 27 ist fest mit der Führungsschiene 17 bzw. dem Fahrzeugdach 10 verbunden und besitzt eine Kulissenbahn 28, die sich an das Vorderende der Schiebezapfen-Führungsbahn 26 der Führungsschiene 17 anschließt und nach vorne abwärts verläuft. Bei geschlossenem Deckel 12 befindet sich der Schiebezapfen 25 (siehe FIGN. 3 und 4) am unteren Ende der Kulissenbahn 28. Der Schiebezapfen 25 ist in der Fahrzeuglängsrichtung (x-Richtung) weitgehend spielfrei geführt und bestimmt damit die exakte Position der Vorderkante 45 in der Schließstellung des Deckels 12.

Die exakte Position der Vorderkante 45 in vertikaler Richtung (z-Richtung) wird durch den Gleitzapfen 23 bestimmt, der in dem Hinterabschnitt der Kulissenbahn 24a in vertikaler Richtung im wesentlichen spielfrei aufgenommen ist. Wenn die Vorderkante 45 des Deckels 12 mittels der Hubkulisse 24 und dem Gleitzapfen 23 durch nach hinten Verfahren des vorderen Steuerschlittens 18 angehoben wird, bewegt sich gleichzeitig der Schiebezapfen 25 entlang der nach hinten ansteigenden Kulissenbahn 28 nach oben und tritt schließlich in das Vorderende der Schiebezapfen-Führungsbahn 26 der Führungsschiene 17 ein (siehe FIG. 7). Nun hat der Deckel 12 im Bereich seiner Vorderkante 45 eine Stellung eingenommen, aus der er nach hinten verschoben werden kann.

Nachfolgend wird der Hub- und Verschiebemechanismus im Bereich der Hinterkante 46 des Deckels 12 anhand einer Längsverschiebung des hinteren Führungsschlittens 19 über das Antriebskabel 21 erläutert.

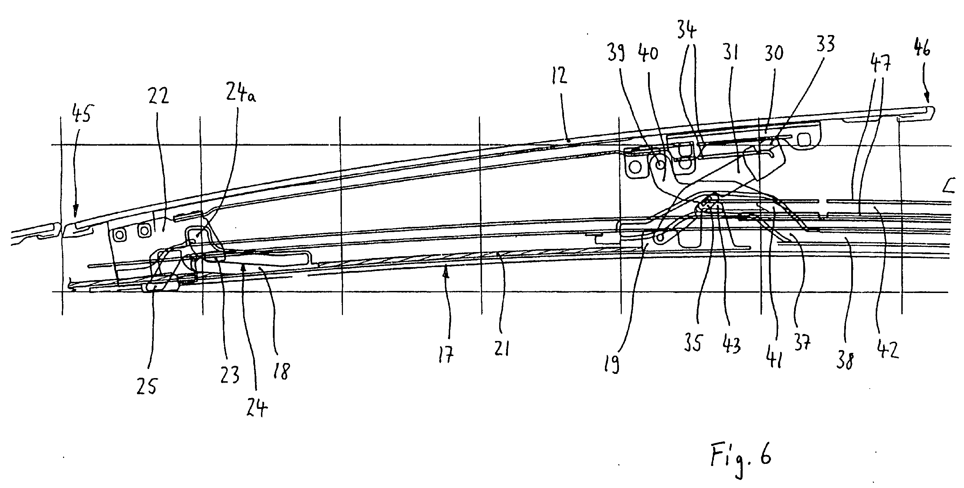

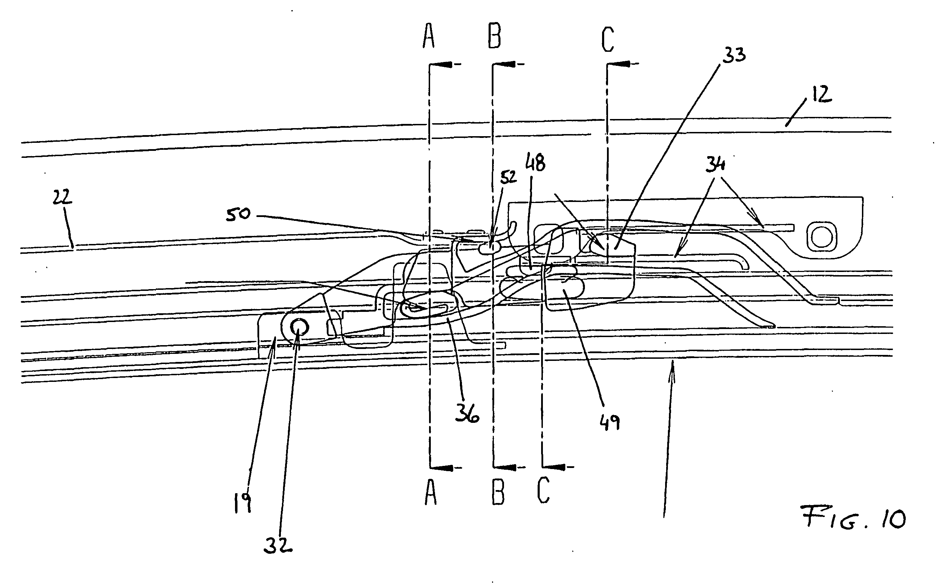

Der Deckel 12 weist im Bereich seiner Hinterkante 46 einen sich abwärts erstrekkenden Deckelträger 30 auf (siehe FIG. 6). Zum Anheben des Hinterrandes bzw. der Hinterkante 46 des Deckels 12 dient ein Ausstellhebel 31, der an seinem Vorderende mittels eines Lagerbolzens 32 (siehe FIG. 10) schwenkbar am hinteren.iSteuerschlittenr19 angelenkt ist und der an seinem Hinterende einen seitlich hervorstehenden hinteren Gleiter 33 aufweist. Der hintere Gleiter 33 greift bei geschlossenem Deckel (FIG. 3) bis zu einer angehobenen Deckelposition bzw. Übergabestellung (FIG. 7) in eine Deckelführung 34 an dem Deckelträger 30 ein, welche nach hinten offen ist (siehe beispielsweise FIG. 6). Zwischen dem Lagerbolzen 32 und dem hinteren Gleiter 33 steht seitlich von dem Ausstellhebel 31 ein vorderer Gleiter 35 vor, der in einer führungsschienenfesten Hubkulisse 36 gleitend geführt ist. Eine Kulissenbahn 37 der Hubkulisse 36 verläuft von vorne nach hinten zunächst ansteigend, daraufhin im wesentlichen parallel zur Längsrichtung der Führungsschiene 17 und dann abfallend und in eine Führungsbahn 38 der Führungsschiene 17 mündend, die mit der Schlittenführungsbahn 20 zusammenfallen kann.

Mittels eines Lagerstifts 39 ist ein Stützhebel 40 für die Hinterkante 46 des Dekkels 12 an dem Deckelträger 30 angelenkt. Am dem Lagerstift 39 gegenüberliegenden Ende des Stützhebels 40 steht von diesem seitlich ein Führungszapfen 41 vor, der in sämtlichen Positionen der Hinterkante 46 des Deckels 12 in einer Führungszapfenbahn 42 einer bezüglich der erstgenannten inneren Führungsschiene 17 äußeren Führungsschiene 47 geführt ist. Die Führungszapfenbahn 42 verläuft in Längsrichtung der Führungsschiene 47. Statt der inneren Führungsschiene 17 und der äußeren Führungsschiene 47 kann auch nur eine Führungsschiene vorgesehen sein, welche die genannten Führungsbahnen enthält.

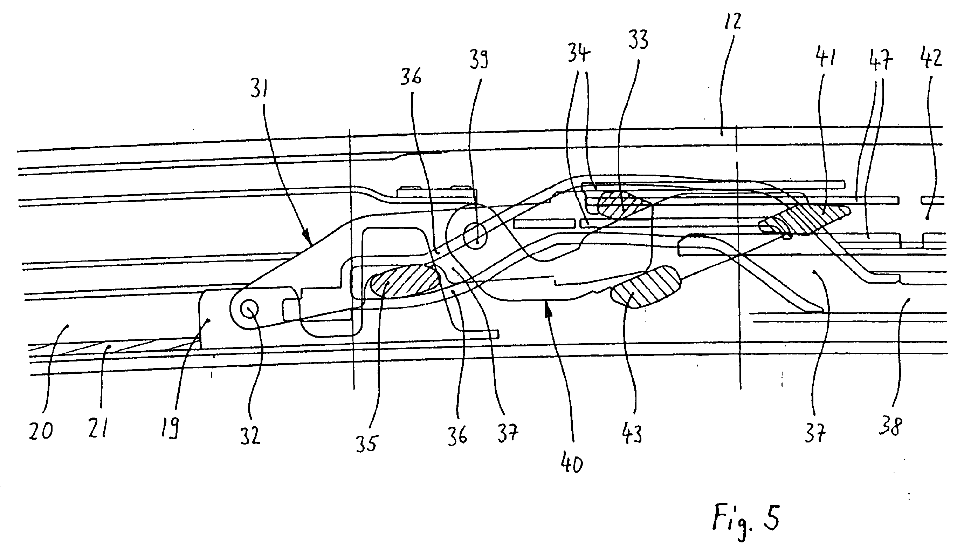

In etwa in der Mitte zwischen dem Lagerstift 39 und dem Führungszapfen 41 steht seitlich von dem Stützhebel 40 ein Stützzapfen 43 hervor (siehe FIG. 5), der erst nach vollständigem Anheben der Hinterkante 46 des Deckels 12 in die Führungszapfenbahn 42 eintritt und bei weiterem Verschieben des Deckels 12 nach hinten in dieser Führungszapfenbahn 42 gleitet, um den rückseitig hochgeschwenkten Deckel 12 gemeinsam mit dem in der Führungszapfenbahn 42 geführten Führungszapfen 41 anstelle des Ausstellhebels 31 abzustützen.

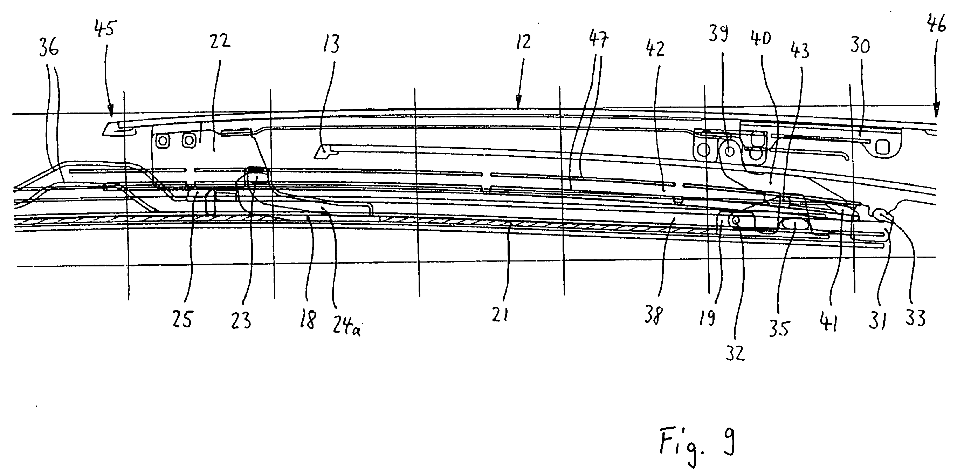

Anhand der Figuren 5 bis 14 wird nachfolgend das Anheben der Hinterkante 46 des Deckels 12 bis in die Deckelöffnungsstellung gemäß FIG. 9 erläutert.

Wenn der hintere Steuerschlitten 19 ausgehend von der Deckelschließposition (siehe FIGN. 3 und 5) mittels des Antriebskabels 21 nach hinten bewegt wird, bewegt sich der vordere Gleiter 35 des Ausstellhebels 31 zunächst in dem vorderen ansteigenden Abschnitt der Kulissenbahn 37 der Hubkulisse 36 aufwärts (FIG. 6), so dass der aufwärts geschwenkte Ausstellhebel 31 mittels des hinteren Gleiters 33, der in der Deckelführung 34 geführt ist, die Hinterkante 46 des Deckels 12 über das feste Dach ausstellt. In der in FIG. 6 gezeigten Position tritt der bislang nicht eingerückte Stützzapfen 43 in die Führungszapfenbahn 42 ein und gleitet nun bei weiterer Rückwärtsbewegung des hinteren Steuerschlittens 19 gemeinsam mit dem vor ihm gleitenden Führungszapfen 41 entlang der Führungszapfenbahn 42 unter Abstützung des Deckels 12 unter einem vorgegebenen Ausstellwinkel nach hinten. Bei der Bewegung des hinteren Steuerschlittens 19 von der in FIG. 3 bzw. 5 gezeigten Position in die in FIG. 6 gezeigte Position, in welcher die Hinterkante 46 des Deckels 12 ausgestellt ist, bewegt sich der hintere Gleiter 33 vom vorderen Ende der Deckelführung 34 zu deren hinterem offenen Ende, aus welchem der hintere Gleiter 33 bei einer weiteren Rückwärtsbewegung des hinteren Steuerschlittens 19 austritt (siehe FIG. 7, welche die Übergabestellung wiedergibt). Während des Übergangs von der in FIG. 6 gezeigten Position zu der in FIG. 7 gezeigten Position bewegt sich der vordere Gleiter 35 entlang des waagrechten Teils der Kulissenbahn 37 der Hubkulisse 36 und gelangt daraufhin in den abfallenden Teil der Kulissenbahn 37, so dass der Ausstellhebel 31 wieder nach unten in etwa in eine horizontale Stellung geschwenkt wird.

Bei einer weiteren Rückwärtsbewegung des hinteren Steuerschlittens 19 tritt der vordere Gleiter 35 in die Führungsbahn 38 ein, die den Ausstellhebel 31 während einer weiteren Rückwärtsbewegung des Steuerschlittens 19 in seine abgesenkte horizontale Stellung führt, in der er funktionslos ist. Die angehobene Position der Hinterkante 46 des Deckels 12 wird nun ausschließlich durch den Stützhebel 40 aufrechterhalten, dessen beide Zapfen 41 und 43 in der Führungszapfenbahn 42 geführt sind.

Die Schließbewegung des Deckels 12 erfolgt bei einem gemeinsamen gekoppelten Vorwärtslauf der beiden Steuerschlitten 18 und 19 mit umgekehrter Abfolge der Schwenkbewegungen der Hinterkante 46 und der Vorderkante 45 des Dekkels 12.

Wie am besten aus den FIGN. 10 bis 13 zu entnehmen ist, sind gemäß der Erfindung Eingriffselemente sowie vorzugsweise Verriegelungselemente vorgesehen, um den Deckel in seiner Schließposition zu stabilisieren. Bei der in FIG. 10 dargestellten Ausführungsform ist an der Oberseite der dachfesten Hubkulisse 36 ein nach oben offener Kulissenschlitz 50 vorgesehen, der in der Deckelschließposition in Eingriff mit einem Eingriffselement 52 steht, das im oberen Bereich des Ausstellhebels 31 vorgesehen ist.

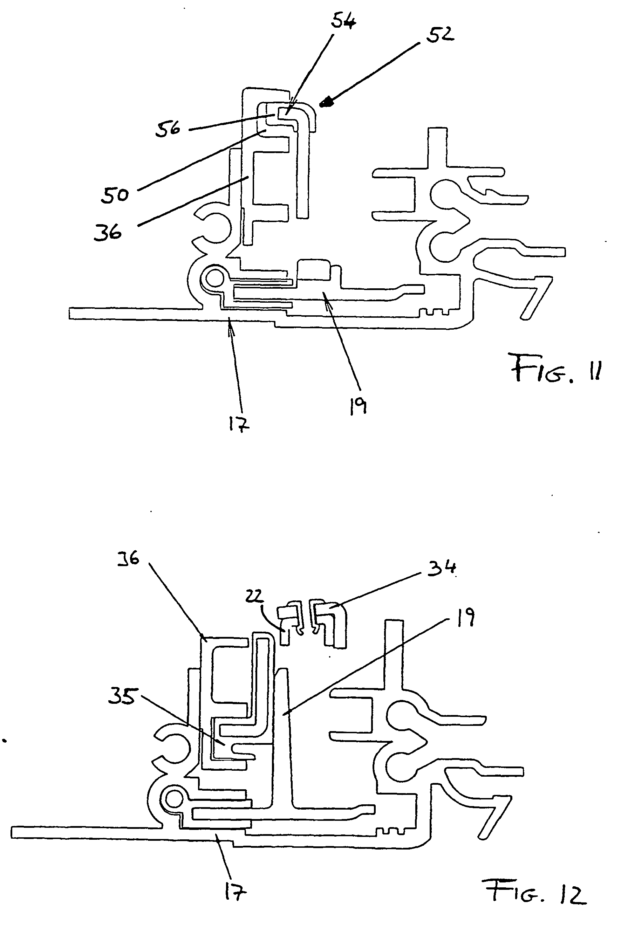

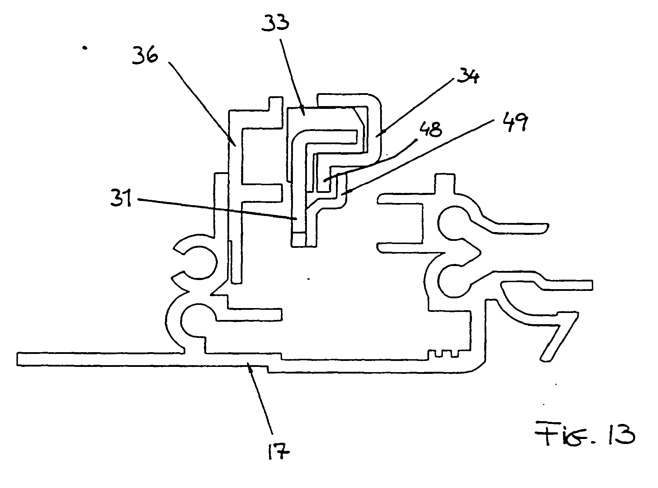

Wie am besten der FIG. 11 zu entnehmen ist, umfasst das Eingriffselement 52 einen seitlich vorstehenden Sperrwinkel 54, der an seinem oberen, zur Seite abstehenden Endbereich ein Gleitelement 56 aufweist, das in der geschlossenen Position des Deckels in den Kulissenschlitz 50 eingefahren ist und den Deckel 12 dachfest fixiert. Darüber hinaus weist das in den FIG. 10 gezeigte Fahrzeugdach Verriegelungselemente auf, von denen eines als Verriegelungslasche 48 und das andere als Verriegelungswinkel 49 ausgebildet ist, wie dies auch in FIG. 13 dargestellt ist. Die Verriegelungslasche 48 ist an der Deckelführung 34 als nach unten weisender Steg in deren vorderem Bereich ausgebildet.

Der Verriegelungswinkel 49 steht seitwärts vom Ausstellhebel 31 vor und umgreift in der Schließposition des Deckels 12 gemäß FIG. 10 die Verriegelungslasche 48. Durch dieses Umgreifen des Verriegelungswinkels 49 um die Verriegelungslasche 48 kann der hintere Gleiter 33 auch bei einem sehr starken Druck auf die Innenseite des Deckels 12 nicht um seine Längsachse aus der Deckelführung 34 herausgedreht bzw. herausgerissen werden. In der Schließposition des Deckels 12 ist somit eine sichere Verriegelung des Deckels 12 über den Ausstellhebel 31 mit der Führungsschiene 17 und somit mit dem festen Fahrzeugdach 10 gewährleistet.

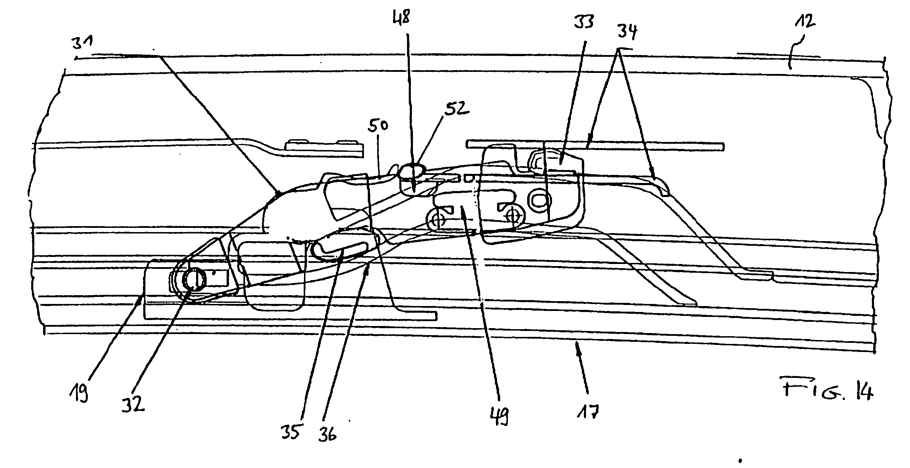

In FIG. 14 ist eine Übergangsposition dargestellt, in welcher sowohl die Eingriffselemente 50 und 52 als auch die Verriegelungselemente 48 und 49 gerade entriegeln. Es versteht sich, dass die Anordnung auch so getroffen sein kann, dass das Ver- und Entriegeln der Eingriffselemente 50 und 52 nicht gleichzeitig mit dem Ver- bzw. Entriegeln der Verriegelungselemente 48 und 49 erfolgt, sondern versetzt dazu.

### Bezugszeichenliste

- 10: Fahrzeugdach
- 11: Windabweiserlamelle
- 12: Deckel
- 13: Dachscheibe
- 14: Seitenholm
- 15: Dachöffnung
- 16: Dichtelement
- 17: Führungsschiene
- 18: vorderer Steuerschlitten
- 19: hinterer Steuerschlitten
- 20: Schlittenführungsbahn
- 21: Antriebskabel
- 22: Deckelträger
- 23: Gleitzapfen
- 24: Hubkulisse
- 24a: Kulissenbahn
- 25: Schiebezapfen
- 26: Schiebezapfen-Führungsbahn
- 27: Kulisse
- 28: Kulissenbahn
- 30: Deckelträger
- 31: Ausstellhebel
- 32: Lagerbolzen
- 33: hinterer Gleiter (an 31)
- 34: Deckelführung
- 35: vorderer Gleiter (an 31)
- 36: Hubkulisse
- 37: Kulissenbahn
- 38: Führungsbahn
- 39: Lagerstift
- 40: Stützhebel
- 41: Führungszapfen
- 42: Führungszapfenbahn
- 43: Stützzapfen
- 44: Windschutzscheibe
- 45: Vorderkante (von 12)
- 46: Hinterkante (von 12)
- 47: äußere Führungsschiene
- 48: Verriegelungslasche
- 49: Verriegelungswinkel
- 50: Kulissenschlitz
- 52: Eingriffselement (an 31)
- 54: Sperrwinkel
- 56: Gleitelement

## Patentansprüche

1. Fahrzeugdach mit wenigstens einem an seiner Hinterkante (46) ausstellbaren und verschiebbaren Deckel (12) und mit einer Steuermechanik für den Deckel (12), die einen nahe der Hinterkante (46) des Deckels (12) an diesem angelenkten hinteren Hub- und Verschiebemechanismus (19, 31) aufweist, der wenigstens einen mit dem Deckel (12) verbundenen Steuerschlitten (19) umfasst, der in seitlichen Führungsschienen (17) verschiebbar geführt und antreibbar ist,
**dadurch gekennzeichnet,**
**dass** ein bewegbares Teil (31) des Hub- und Verschiebemechanismus und ein dachfestes Teil (36) Eingriffselemente (50, 52) aufweisen, die in der Schließposition des Deckels (12) wirksam sind und einem Ausdrücken des Deckels (12) nach oben entgegenwirken.

2. Fahrzeugdach nach Anspruch 1,
**dadurch gekennzeichnet, dass** das bewegbare Teil des Hub- und Verschiebemechanismus (19, 31) von einem Ausstellhebel (31) gebildet wird.

3. Fahrzeugdach nach Anspruch 1 oder 2,
**dadurch gekennzeichnet, dass** das dachfeste Teil (36) eine Verriegelungskulisse (50) umfasst, in die das an dem bewegbaren Teil (31) des Hub- und Verschiebemechanismus vorgesehene Eingriffselement (52) beim Schließen des Deckels (12) einfährt.

4. Fahrzeugdach nach einem der vorhergehenden Ansprüche,
**dadurch gekennzeichnet, dass** das Eingriffselement (52) an dem bewegbaren Teil (31) des Hub- und Verschiebemechanismus als ein seitlich vorstehender Sperrwinkel (54) ausgebildet ist.

5. Fahrzeugdach nach Anspruch 4,
**dadurch gekennzeichnet, dass** mindestens der seitlich vorstehende Teil des Sperrwinkels (54) mit einen Gleitelement (56) versehen ist.

6. Fahrzeugdach nach einem der vorhergehenden Ansprüche,
**dadurch gekennzeichnet, dass** die Eingriffselemente (50, 52) in der Schließposition des Deckels (12) einem Ausdrücken des Deckels (12) nach unten entgegenwirken.

7. Fahrzeugdach nach einem der vorhergehenden Ansprüche,
**dadurch gekennzeichnet, dass** ein bewegbares Teil (31) des Hub- und Verschiebemechanismus (19, 31) und ein mit dem Deckel (12) verbundenes Teil (22, 34) jeweils in der Schließposition des Deckels (12) wirksame Verriegelungselemente (48 bzw. 49) aufweisen, die einem Ausdrücken des Deckels (12) nach oben entgegenwirken.

8. Fahrzeugdach nach Anspruch 7,
**dadurch gekennzeichnet, dass** das bewegbare Teil des Hub- und Verschiebemechanismus (19, 31) von einem Ausstellhebel (31) gebildet wird.

9. Fahrzeugdach nach Anspruch 7,
**dadurch gekennzeichnet, dass** das an einem bewegbaren Teil des Hub- und Verschiebemechanismus (19, 31) vorgesehene Eingriffselement (52) und das an einem bewegbaren Teil des Hub- und Verschiebemechanismus vorgesehene Verriegelungselement (49) an ein und dem selben Ausstellhebel (31) vorgesehen sind.

10. Fahrzeugdach nach einem der Ansprüche 7 bis 9,
**dadurch gekennzeichnet, dass** das mit dem Deckel (12) verbundene Teil von einer Deckelführung (34) gebildet wird, die mit einem Teil (33) des Hub- und Verschiebemechanismus (19, 31) in Eingriff steht und eine Relativbewegung desselben gegenüber dem Deckel (12) beim Ausstellen ermöglicht.

11. Fahrzeugdach nach einem der Ansprüche 7 bis 10,
**dadurch gekennzeichnet, dass** das Verriegelungselement an dem mit dem Deckel (12) verbundenen Teil (34) als nach unten abgebogene Verriegelungslasche (49) ausgebildet ist.

12. Fahrzeugdach nach einem der Ansprüche 7 bis 11,
**dadurch gekennzeichnet, dass** das Verriegelungselement an dem bewegbaren Teil (31) des Hub- und Verschiebemechanismus als seitlich und nach oben vorstehender Verriegelungswinkel (49) ausgebildet ist.

13. Fahrzeugdach nach einem der vorhergehenden Ansprüche,
**dadurch gekennzeichnet, dass** der Deckel (12) oberhalb des festen Fahrzeugdaches (10) nach hinten verschiebbar ist.

14. Fahrzeugdach nach einem der vorhergehenden Ansprüche,
**dadurch gekennzeichnet, dass** der Hub- und Verschiebemechanismus einen an einem hinteren Steuerschlitten (19) schwenkbar angelenkten Ausstellhebel (31) umfasst, der durch eine dachfeste Hubkulisse (36) bei einer Rückwärtsbewegung des hinteren Steuerschlittens (19) zum Anheben der Hinterkante (46) des Deckels (12) angehoben wird und dabei die Eingriffselemente sowie die Verriegelungselemente (48, 49) außer Wirkeingriff bringt.

15. Fahrzeugdach nach Anspruch 14,
**dadurch gekennzeichnet, dass** nach dem Außer-Eingriff-Bringen der Eingriffselemente sowie der Verriegelungselemente (48, 49) der Ausstellhebel (31) außer Eingriff mit dem Deckel (12) gebracht wird und dabei die Abstützung der Hinterkante (46) des Deckels (12) an einen separaten Stützhebel (40) übergibt.

## Claims

1. Vehicle roof comprising at least one panel (12) which can be opened at its rear edge (46) and displaced, and having a control mechanism for the panel (12) which has a lifting and displacing mechanism (19, 31) attached to the panel (12) close to the rear edge (46) of the latter and which comprises at least one control slide (19) which is connected to the panel (12) and is guided in lateral guide rails (17) such that it can be displaced and driven, **characterized in that** a movable part (31) of the lifting and displacing mechanism and a part (36) fixed to the roof have engaging elements (50, 52) which are effective in the closed position of the panel (12) and counteract the panel (12) being forced out upwards.

2. Vehicle roof according to Claim 1, **characterized in that** the movable part of the lifting and displacing mechanism (19, 31) is formed by an opening lever (31).

3. Vehicle roof according to Claim 1 or 2, **characterized in that** the part (36) fixed to the roof comprises a locking slotted guide (50), into which the engaging element (52) provided on the movable part (31) of the lifting and displacing mechanism moves as the panel (12) is closed.

4. Vehicle roof according to one of the preceding claims, **characterized in that** the engaging element (52) on the movable part (31) of the lifting and displacing mechanism is formed as a blocking angle (54) that projects laterally.

5. Vehicle roof according to Claim 4, **characterized in that** at least the laterally projecting part of the blocking angle (54) is provided with a sliding element (56).

6. Vehicle roof according to one of the preceding claims, **characterized in that**, in the closed position of the panel (12), the engaging elements (50, 52) counteract the panel (12) being forced out downwards.

7. Vehicle roof according to one of the preceding claims, **characterized in that** a movable part (31) of the lifting and displacing mechanism (19, 31) and a part (22, 34) connected to the panel (12) have locking elements (48 and 49) which are each effective in the closed position of the panel (12) and counteract the panel (12) being forced out upwards.

8. Vehicle roof according to Claim 7, **characterized in that** the movable part of the lifting and displacing mechanism (19, 31) is formed by an opening lever (31).

9. Vehicle roof according to Claim 7, **characterized in that** the engaging element (52) provided on a movable part of the lifting and displacing mechanism (19, 31), and the locking element (49) provided on a movable part of the lifting and displacing mechanism, are provided on one and the same opening lever (31).

10. Vehicle roof according to one of Claims 7 to 9, **characterized in that** the part connected to the panel (12) is formed by a panel guide (34), which is in engagement with a part (33) of the lifting and displacing mechanism (19, 31) and permits a relative movement of the same with respect to the panel (12) during opening.

11. Vehicle roof according to one of Claims 7 to 10, **characterized in that** the locking element on the part (34) connected to the panel (12) is formed as a locking lug (49) that is bent over downwards.

12. Vehicle roof according to one of Claims 7 to 11, **characterized in that** the locking element on the movable part (31) of the lifting and displacing mechanism is formed as a locking angle (49) that projects laterally and upwards.

13. Vehicle roof according to one of the preceding claims, **characterized in that** the panel (12) can be displaced rearwards above the fixed vehicle roof (10).

14. Vehicle roof according to one of the preceding claims, **characterized in that** the lifting and displacing mechanism comprises an opening lever (31) which is attached to a rear control slide (19) such that it can be pivoted, during a rearward movement of the rear control slide (19) is raised by a slotted lifting guide (36) fixed to the roof in order to raise the rear edge (46) of the panel (12) and, in the process, brings the engaging elements and the locking elements (48, 49) out of active engagement.

15. Vehicle roof according to Claim 14, **characterized in that**, after the engaging elements and the locking elements (48, 49) have been disengaged, the opening lever (31) is disengaged from the panel (12) and, in the process, transfers the support of the rear edge (46) of the panel (12) to a separate supporting lever (40).

## Revendications

1. Toit de véhicule comprenant au moins un capot (12) coulissant et déployable sur son bord postérieur (46), et un mécanisme de commande du capot (12), présentant un mécanisme postérieur (19, 31) de levage et de coulissement qui est articulé sur ledit capot (12) à proximité du bord postérieur (46) de ce dernier, et englobe au moins un chariot de commande (19) relié audit capot (12), et pouvant être entraîné et guidé à coulissement dans des glissières latérales de guidage (17),
**caractérisé par le fait**
**qu'**une pièce mobile (31) du mécanisme de levage et de coulissement, et une pièce (36) faisant corps avec le pavillon, comportent des éléments (50, 52) de venue en prise qui sont opérants dans la position fermée du capot (12), et s'opposent à une expulsion dudit capot (12) vers le haut.

2. Toit de véhicule, selon la revendication 1,
**caractérisé par le fait que** la pièce mobile du mécanisme (19, 31) de levage et de coulissement est matérialisée par un levier de déploiement (31).

3. Toit de véhicule, selon la revendication 1 ou 2,
**caractérisé par le fait que** la pièce (36) faisant corps avec le pavillon englobe une coulisse de verrouillage (50) dans laquelle l'élément (52) de venue en prise, prévu sur la pièce mobile (31) du mécanisme de levage et de coulissement, pénètre au stade de la fermeture du capot (12).

4. Toit de véhicule, selon l'une des revendications précédentes,
**caractérisé par le fait que** l'élément (52) de venue en prise, situé sur la pièce mobile (31) du mécanisme de levage et de coulissement, est réalisé sous la forme d'une cornière de blocage (54) saillant latéralement.

5. Toit de véhicule, selon la revendication 4,
**caractérisé par le fait qu'**au moins la partie de la cornière de blocage (54), qui fait saillie latéralement, est pourvue d'un élément glissant (56).

6. Toit de véhicule, selon l'une des revendications précédentes,
**caractérisé par le fait que**, dans la position fermée du capot (12), les éléments (50, 52) de venue en prise s'opposent à une expulsion dudit capot (12) vers le bas.

7. Toit de véhicule, selon l'une des revendications précédentes,
**caractérisé par le fait qu'**une pièce mobile (31) du mécanisme (19, 31) de levage et de coulissement, et une pièce (22, 34) reliée au capot (12), comportent des éléments de verrouillage (48, respectivement 49) qui sont respectivement opérants dans la position fermée du capot (12), et s'opposent à une expulsion dudit capot (12) vers le haut.

8. Toit de véhicule, selon la revendication 7,
**caractérisé par le fait que** la pièce mobile du mécanisme (19, 31) de levage et de coulissement est matérialisée par un levier de déploiement (31).

9. Toit de véhicule, selon la revendication 7,
**caractérisé par le fait que** l'élément (52) de venue en prise prévu sur une pièce mobile du mécanisme (19, 31) de levage et de coulissement, et l'élément de verrouillage (49) prévu sur une pièce mobile dudit mécanisme de levage et de coulissement, sont prévus sur un seul et même levier de déploiement (31).

10. Toit de véhicule, selon l'une des revendications 7 à 9,
**caractérisé par le fait que** la pièce reliée au capot (12) est matérialisée par un guide (34) dudit capot qui est en prise avec une pièce (33) du mécanisme (19, 31) de levage et de coulissement et autorise, au stade du déploiement, un mouvement relatif de ladite pièce vis-à-vis dudit capot (12).

11. Toit de véhicule, selon l'une des revendications 7 à 10,
**caractérisé par le fait que** l'élément de verrouillage, situé sur la pièce (34) reliée au capot (12), est réalisé sous la forme d'une patte de verrouillage (49) coudée vers le bas.

12. Toit de véhicule, selon l'une des revendications 7 à 11,
**caractérisé par le fait que** l'élément de verrouillage, situé sur la pièce mobile (31) du mécanisme de levage et de coulissement, est réalisé sous la forme d'une cornière de verrouillage (49) saillant latéralement et vers le haut.

13. Toit de véhicule, selon l'une des revendications précédentes,
**caractérisé par le fait que** le capot (12) peut coulisser vers l'arrière au-dessus dudit toit fixe (10) du véhicule.

14. Toit de véhicule, selon l'une des revendications précédentes,
**caractérisé par le fait que** le mécanisme de levage et de coulissement englobe un levier de déploiement (31) qui est articulé à pivotement sur un chariot postérieur de commande (19) ; est relevé par une coulisse de levage (36) faisant corps avec le pavillon, lors d'un mouvement rétrograde dudit chariot postérieur de commande (19), en vue de soulever le bord postérieur (46) du capot (12) ; et supprime alors l'engagement actif des éléments de venue en prise, ainsi que des éléments de verrouillage (48, 49).

15. Toit de véhicule, selon la revendication 14,
**caractérisé par le fait que**, après la suppression de l'engagement actif des éléments de venue en prise, ainsi que des éléments de verrouillage (48, 49), le levier de déploiement (31) est désengage d'avec le capot (12) et délègue alors, à un levier d'appui (40) distinct l'appui du bord postérieur (46) dudit capot (12).
